# EUROPEAN PATENT SPECIFICATION

(11) **EP 1 772 295 B1**
(45) Date of publication and mention of the grant of the patent: **25.11.2009**
(21) Application number: 05256284.0
(22) Date of filing: 10.10.2005
(51) Int. Cl.: B60C 23/04

(54) **Low frequency receiver with magnetically sensitive detector element**
Niederfrequenzempfänger mit Magnetfelddetektor
Récepteur à basse fréquence avec détecteur de champ magnétique

(43) Date of publication of application: 11.04.2007
(73) Proprietor: Infineon Technologies SensoNor AS, 3192 Horten (NO)
(72) Inventor: Blixhavn, Bjorn, 3192 Horten (NO)
(74) Representative: Haley, Stephen

(56) References cited:
- EP-A- 0 980 805
- EP-A- 1 561 608
- US-B1- 6 426 620
- PATENT ABSTRACTS OF JAPAN vol. 008, no. 049 (E-230), 6 March 1984 (1984-03-06) & JP 58 201428 A (YAMATAKE HONEYWELL KK), 24 November 1983 (1983-11-24)

## Description

The present invention relates to a receiver for a tyre pressure monitoring system (TPMS) wheel module.

TPMSs are becoming a common feature in modern vehicles. In many TPMSs, it is a requirement to have a communication channel which can be used to wake up or give short commands to the wheel module of the vehicle with the TPMS. The communication channel is used during assembly of the wheel module to transfer the wheel module from a storage state into an operating state, and also to trigger the immediate transfer of measurement data during testing or calibration procedures. During servicing of a vehicle, such as replacing worn tyres or changing between summer and winter tyres, the channel is used to teach the vehicle the location of the individual tyres. The channel may also be used for communication with the wheel module during driving, although this use requires transmitters to be placed at each wheel, which makes it expensive.

For the harsh environment of the vehicle within which a TPMS operates and due to the rotation of the wheels, it is undesirable to implement the communication channel by means of galvanic contact and instead a non-contact communication system is used. This requires additional components in the system to receive the transmitted signal.

At present, the most common way of implementing the communication channel to the TPMS wheel module is by means of a low frequency (LF) channel which transmits electromagnetic waves at a frequency of typically 125 kHz. This means that the wheel module contains a resonant antenna (tank circuit) consisting of a coil, a capacitor, and optionally a resistor to limit the Q-factor of the circuit.

A disadvantage of the current technology is the need for the antenna coil to detect the LF field. This is a relatively large and expensive component. There is a continuous pressure to make the wheel module smaller, lighter and cheaper, and the use of an LF coil is not in accordance with these goals.

A further disadvantage of the current technology is that at strong LF fields, the antenna circuit may induce high currents into the input amplifier. Precautions are needed to ensure that these currents do not harm the receiver.

JP58-201428 shows a receiver wherein a magnetoresistive detector element is used to detect the magnetic flux changes of a signal sent by a corresponding transmitter.

According to the present invention there is provided a tyre pressure monitoring system (TPMS)comprising a wheel module having a receiver, the receiver comprising:
a giant magnetoresistive (GMR) detector element;
a receiver element, and
a signal processor connected to the detector and receiver elements;
wherein the receiver is arranged such that the GMR detector element detects, in use, a low frequency signal transmitted by a TPMS transmitter.

The present invention provides an advantageous means of detecting the electromagnetic LF field. The detecting element has negligible mass, and can be integrated into the application specific integrated circuit (ASIC) of the wheel module. The detecting element is passive, and cannot generate voltages or currents that can harm the ASIC. The invention offers significant improvements in applications which must be optimized for size, weight and cost.

Examples of the present invention will now be described with reference to the accompanying drawings, in which:
Figure 1 shows an example of a receiver in accordance with the present invention; and
Figure 2 illustrates a transmitter-receiver chain incorporating the receiver of the present invention.

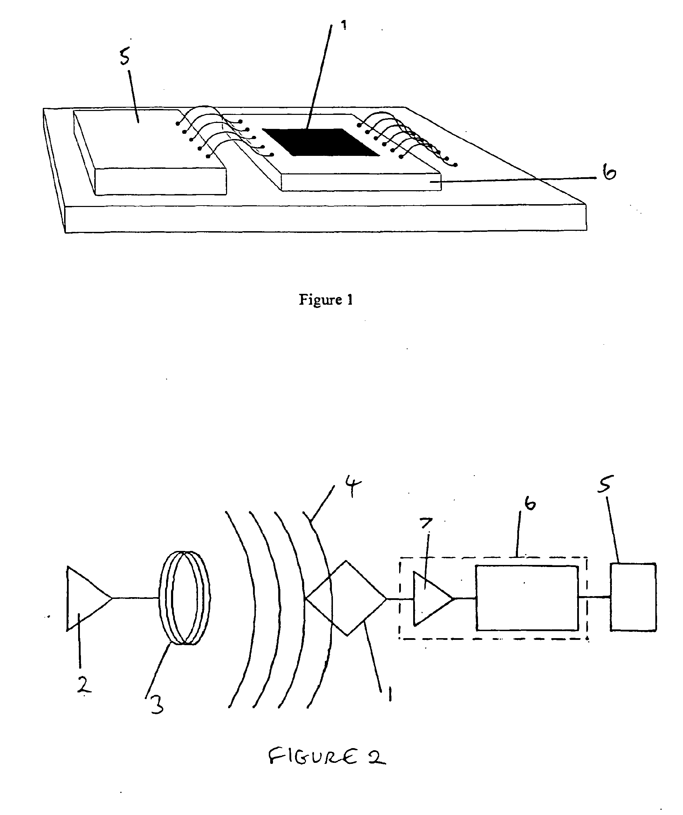

Referring to figure 1, an example receiver according to the present invention comprises a detecting element 1 deposited on top of a signal processing integrated circuit 6. A sensitive receiver element 7, shown in figure 2, which may be, for example, tuned to 125 kHz, is included as a component of the integrated circuit 6. A TPMS sensor chip 5 is connected to the signal processing circuit.

The detecting element 1 of the present invention consists of a highly sensitive magnetoresistive film. Current examples are giant magnetoresistive (GMR) film, which has a change in resistivity of 20% or more in relatively weak magnetic fields, or colossal magnetoresistive (CMR) film, which has a change in resistivity of orders of magnitude in a magnetic field. For simplicity, GMR is used to refer to all of these large magnetoresistive effects throughout the description and claims. The film is deposited on the top surface of the integrated circuit, and patterned into a sensing structure, typically a full bridge or half bridge. In one embodiment of the invention, the GMR film is sputtered on top of the passivation layer. This is compatible with standard CMOS technology.

The film of the detecting element 1 is connected to the integrated circuit with metal contacts such as tungsten plugs that penetrate the top passivating layer of the chip. There are usually four connections to the active circuits of the integrated circuit 6. The bridge signal is amplified, filtered and detected by the electronic circuits.

The GMR detector element can also be deposited on any other type of integrated circuit, or included as a separate chip, connected to the signal processing chip by bonding wires. In a multi-chip sensor, the GMR structure can also be included on the sensor chip.

The signal processing electronics can include filters to admit only a certain range of signal frequencies, and detector circuits to distinguish between signals above or below a certain magnitude. More complex decoders that can receive address and data modulated on the detected signal, and act on this information, are also possible. Other signalling frequencies than 125 kHz are also possible.

Referring to the example in figure 2, the TPMS transmitter 2 transmits data via an antenna coil 3, in the form of LF electromagnetic waves 4. The signals are detected by the GMR element 1 and are then passed via a receiver element 7 to the signal processing circuits 6 of the chip. For the majority of applications, the LF transmitter can be placed close to the wheel module, which gives a sufficient signal.

## Claims

1. A tyre pressure monitoring system (TPMS) comprising a wheel module having a receiver, the receiver comprising:
a giant magnetoresistive (GMR) detector element (1);
a receiver element (7); and
a signal processor (6) connected to the detector and receiver elements;
wherein the receiver is arranged such that the GMR detector element (1) detects, in use, a low frequency signal transmitted by a TPMS transmitter (2).

2. A system according to claim 1, wherein the detector element (1) is a film.

3. A system according to claim 1 or claim 2, wherein the detector element is deposited on the surface of an integrated circuit (6).

4. A system according to any preceding claim, wherein the receiving element (7) is tuned to a frequency between 80 and 170 kHz

5. A system according to claim 4, wherein the receiving element (7) is tuned to 125 kHz.

## Patentansprüche

1. Reifendrucküberwachungssystem (TPMS), welches ein Radmodul mit einem Empfänger umfasst, wobei der Empfänger umfasst:
ein Riesenmagnetwiderstand-(GMR)-Detektorelement (1);
ein Empfängerelement (7); und
einen Signalprozessor (6), der mit dem Detektorelement und dem Empfängerelement verbunden ist;
wobei der Empfänger so ausgelegt ist, dass das GMR-Detektorelement (1) im Einsatz ein Niederfrequenzsignal detektiert, das von einem TPMS-Sender (2) übertragen wird.

2. System gemäß Anspruch 1, wobei das Detektorelement (1) eine Folie ist.

3. System gemäß Anspruch 1 oder Anspruch 2, wobei das Detektorelement auf der Oberfläche einer integrierten Schaltung (6) abgelegt ist.

4. System gemäß einem der vorhergehenden Ansprüche, wobei das empfangende Element (7) auf eine Frequenz zwischen 80 und 170 kHz eingestellt ist.

5. System gemäß Anspruch 4, wobei das empfangende Element (7) auf 125 kHz eingestellt ist.

## Revendications

1. Système de surveillance de la pression d'un pneu (TPMS) comprenant un module de roue possédant un récepteur, le récepteur comprenant :
un élément détecteur (1) à effet magnétorésistif géant (GMR),
un élément récepteur (7), et
un processeur de signal (6) relié aux éléments détecteur et récepteur,
dans lequel le récepteur est agencé de telle sorte que l'élément détecteur GMR (1) détecte, en fonctionnement, un signal à basse fréquence transmis par un transmetteur (2) du TPMS.

2. Système selon la revendication 1, dans lequel l'élément détecteur (1) est un film.

3. Système selon la revendication 1 ou la revendication 2, dans lequel l'élément détecteur est déposé à la surface d'un circuit intégré (6).

4. Système selon l'une quelconque des revendications précédentes, dans lequel l'élément récepteur (7) est accordé sur une fréquence entre 80 et 170 kHz.

5. Système selon la revendication 4, dans lequel l'élément récepteur (7) est accordé sur 125 kHz.
